# EUROPÄISCHE PATENTSCHRIFT

(11) **EP 2 584 534 B1**
(45) Veröffentlichungstag und Bekanntmachung des Hinweises auf die Patenterteilung: **22.01.2020**
(21) Anmeldenummer: 12189021.4
(22) Anmeldetag: 18.10.2012
(51) Int. Cl.: G06T 17/20, G06T 7/00, G06T 19/20, G06T 17/10

(54) **Computerimplementiertes Verfahren zum Erzeugen eines virtuellen 3D-Modells eines realen dreidimensionalen realen Objekts sowie auf dieser Grundlage geformtes Produkt**
Computer-implemented method for creating a virtual 3D model of a real three-dimensional real object and product formed on this basis
Procédé implémenté par ordinateur destiné à générer un modèle en 3D virtuel d'un objet réel tridimensionnel ainsi que le produit formé sur cette base

(30) Priorität: 20.10.2011 DE 102011116386
(43) Veröffentlichungstag der Anmeldung: 24.04.2013
(73) Patentinhaber: DOOB GROUP AG, 40221 Düsseldorf (DE)
(72) Erfinder: Scheuermann, Sascha Felix, 41462 Neuss (DE); Puhalac, Vladimir, 41469 Neuss (DE); Bernasco Lisboa, Carl Torsten, 40479 Düsseldorf (DE)
(74) Vertreter: Gille Hrabal

(56) Entgegenhaltungen:
- US-A1- 2001 033 283
- BAJAJ C L ET AL: "Arbitrary Topology Shape Reconstruction from Planar Cross Sections", CVGIP GRAPHICAL MODELS AND IMAGE PROCESSING, ACADEMIC PRESS, DULUTH, MA, US, Bd. 58, Nr. 6, 1. November 1996 (1996-11-01), Seiten 524-543, XP004418964, ISSN: 1077-3169, DOI: 10.1006/GMIP.1996.0044
- D Ma ET AL: "Volume Modeling for Rapid Prototyping", , 1999, Seiten 77-84, XP055242920, Gefunden im Internet: URL:http://sffsymposium.engr.utexas.edu/Ma nuscripts/1999/1999-009-Ma.pdf [gefunden am 2016-01-19]
- MEYERS D ET AL: "SURFACES FROM CONTOURS", ACM TRANSACTIONS ON GRAPHICS (TOG), ACM, US, Bd. 11, Nr. 3, 1. Juli 1992 (1992-07-01), Seiten 228-258, XP000306275, ISSN: 0730-0301, DOI: 10.1145/130881.131213

## Beschreibung

Die Erfindung betrifft ein computerimplementiertes Verfahren zum Erzeugen eines virtuellen 3D-Modells eines dreidimensionalen realen Objekts sowie ein auf dieser Grundlage geformtes Produkt.

Virtuelle 3D-Modelle sind weit verbreitete Objekte künstlerischen und technischen Schaffens, Es handelt sich dabei um Datensätze, die die äußeren Grenzen (z. B. im Fall von Gitternetzen bzw. 3D-Mesh) oder Volumen (im Fall von Voxel, welche das dreidimensionale Äquivalent zu Pixel sind). Virtuelle 3D-Modelle können am Computer erschaffen werden, z. B. durch technisches Konstruieren (CAD), durch freie Formgestaltung unter Nutzung spezieller Eingabehilfen (z. B. Voxel-Sculpting unter Verwendung einer Maus, 3D Handschuhe, etc.) oder aufgrund von der Erfassung real existierender Gegenstände mit technischen Mitteln (z. B. bildgebende Verfahren, insbesondere MRT, CT, 3D-Oberflächenscan). Letzteres Verfahren erlaubt in der Regel eine schichtweise Erfassung einer Vielzahl von 2D-Scans. Aus diesem 2D- Scans werden dreidimensional wirkende Bilder erzeugt und auf dem Bildschirm eines Computers dargestellt. Diese Bilder werden mit vergleichsweise einfachen Verfahren, wie z. B. Voxel-Rendering erzeugt und bilden eine Projektion ohne echte 3D- Informationen, wobei die aufwändige Berechnung der plastisch wirkenden Ansicht nicht in Echtzeit erfolgen kann. Ein Drehen eines mittels CT erzeugten Bildes eines Kopfes durch den Nutzer ist daher nicht spontan möglich. Aus dem gleichen Grund sind auch bildhafte Bearbeitungen der auf dem Bildschirm angezeigten Objekte nicht möglich, beispielsweise kann die Länge der Nase des virtuellen Objekts nicht verändert werden.

Die virtuellen Objekte können auch auf Grundlage eines Gittermodells, bestehend aus Triangles und/oder Quads angezeigt werden. Eine Bearbeitung desselben ist allerdings nur sehr begrenzt möglich, da die Anzahl an Knotenpunkten vorgegeben ist und beim exzessiven Herausziehen eines Knotenpunktes sehr lange Gitterstäbe entstehen, welche wiederum nicht mehr unterteilt und verformt werden können. Die Auflösung des Modells in diesem Bereich wird für viele Zwecke zu grob.

Im künstlerischen Bereich ist das Voxel-Sculpting, also das "virtuelle Bildhauen" mittels Voxel verbreitet. Der Begriff Voxel ist zusammengesetzt aus "volumetric" und "pixel" und bezeichnet in der 3D-Computergrafik einen Datenpunkt einer dreidimensionalen Rastergrafik, was einem Pixel in einem 2D Bild entspricht. Im Gegensatz zu der Darstellung mit Gitternetzen, sind Voxel gut bei der Repräsentation eines äquidistant gesampelten Raums, der nicht homogen gefüllt ist. Es gibt Voxeleditoren mit denen man voxelbasierte Modelle selber kreieren bzw. abgespeicherte Modelle verändern kann, ohne dass genaue Abmessungen Gegenstand des Modells sind.

US Patentanmeldung US2001/0033283 A1 offenbart ein Verfahren zum Identifizieren und/oder Manipulieren einer 3D Region aus einem Stapel von 2D Schichten. Aus vom Benutzer in Schichten identifizierten Strukturen wird ein Polygon-Oberflächenmodell erzeugt, welches zur weiteren Verwendung in Voxeldaten umgewandelt wird.

Aus dem Stand der Technik sind keine computerimplementierten Verfahren zum Erzeugen eines virtuellen 3D-Modells eines realen dreidimensionalen realen Objekts bekannt, mittels denen das mit den üblichen bildgebenden Verfahren erzeugte virtuelle 3D-Modell derart bearbeitet werden kann, dass ein maßgerechtes Produkt auf Grundlage dieses Modells automatisch erzeugt werden kann.

Es ist daher die Aufgabe der vorliegenden Erfindung, ein verbessertes computerimplementiertes Verfahren zum Erzeugen eines virtuellen 3D-Modells eines realen dreidimensionalen realen Objekts sowie auf dieser Grundlage geformtes Produkt, zu schaffen.

Diese Aufgabe wird gelöst mit einem Verfahren mit den Merkmalen des Hauptanspruchs. Vorteilhafte Ausgestaltungen sind Gegenstand der Unteransprüche. Ferner wird ein entsprechendes Produkt mit den Merkmalen des nebengeordneten Anspruchs angegeben,

Die Erfindung beinhaltet ein computerimplementiertes Verfahren, also ein auf einem Computer mittels Anwendungsprogramme durchzuführendes Verfahren, wobei die nachfolgend angegebenen Zwischenschritte durch Auswahl/Mitwirkung des Nutzers durchgeführt werden. Ein Computer im Sinn der Erfindung ist nicht zwingend ein einzelnes Gerät. Das Verfahren kann auch aufeinander aufbauend auf verschiedenen vollkommen unabhängigen Rechnern, aber auch im Scanner selber durchgeführt werden,

Das Verfahren erzeugt ein virtuelles 3D-Modell, also einen Datensatz mit Raumpunkten (z. B. XYZ oder auch Polarkoordinaten) und jedem dieser Raumpunkte zugeordneten diskreten Werten (z. B. Graustufen, Farbwerten, Strahlungswerten, Absorption, Reflektion) eines realen dreidimensionalen realen Objekts. Dabei kommen üblicherweise Scanner zur Erfassung dieser Daten zum Einsatz. Vorliegend sind davon insbesondere wissenschaftliche, medizinische, therapeutische und kosmetische bildgebende Verfahren umfasst, Zur Verarbeitung der Daten ist der Scanner mit einem Computer verbunden, wobei der Begriff Computer funktionell zu verstehen ist, also auch Bestandteil des Scanners sein kann.

Die Erfindung benutzt einen 3D-Scanner, weicher üblicherweise eine Mehrzahl von schichtweisen 2D-Scans in einem Pixelformat erzeugt. Das Objekt wird also "Scheibe für Scheibe" gescant und es ergeben sich eine Vielzahl von 2D-Scans, die jeweils einen Schnitt durch das reale Objekt repräsentieren, wie ist z. B. von den CT- Aufnahmen bekannt ist.

In einem weiteren Schritt werden in den 2D-Scans Strukturen identifiziert. Dies erfolgt in der Regel zumindest teilweise manuell, d. h. der Benutzer markiert am Bildschirm die für das Ergebnis des Verfahrens wichtigen Strukturen, z. B. den Schnitt durch eine Ohrmuschel in einer Schichtaufnahme. Dem Fachmann werden dazu eine Vielzahl von Methoden einfallen. Z. B. kann der Nutzer die aus dem Bildbearbeitungsbereich bekannten kontrastverstärkenden Maßnahmen durchführen lassen und den relevanten Bereich um das Ohr herum grob markieren, z. B. mittels einer Freihandlinie, Sodann kann das Bildbearbeitungsprogramm den innerhalb der Freihandlinie liegenden Bereich auf das Vorhandensein von allen Rändern analysieren, auch bekannt als "Magic-Wand-Funktion". Gegebenenfalls können dabei die vom Benutzer iterativ in einem der 2D-Scans herausgefunden Parameter abgespeichert und zur automatischen Analyse der höher und tiefer liegenden weiteren 2D-Scans herangezogen werden. Alternativ ist es auch möglich, dass der Nutzer manuell die Ränder analysiert und in den oder die 2D-Scans einzeichnet. Der Nutzer kann auch in nur einem 2D-Scan die Ränder einzeichnen und der Computer analysiert die Eigenschaft der in den Rändern liegenden Bildpunkte und sucht in den höher und tiefer liegenden übrigen 2D-Scans nach ähnlichen Bildpunkten und analysiert diese automatisch nach Rändern. Wesentlich ist, dass auf eine zweckmäßige Weise die Ränder der jeweiligen Strukturen markiert werden.

In einem weiteren Schritt werden die 2D-Scans jeweils aus dem Pixelformat in ein Vektorformat konvertiert, wobei die Vektoren entlang der jeweiligen Ränder der markierten Strukturen verlaufen. Es findet also eine Umwandlung der relevanten Strukturen aus dem Pixelformat in ein Vektorformat statt. Zur Vektorisierung kennt der Fachmann zahlreiche Verfahren, z. B. unter Nutzung von "Boundary Splines" oder der einfachen "Pfadbildung".

Sodann wird mittels üblicher automatischer Verfahren ein Gitternetz in die jeweiligen Ränder der geschichteten vektorisierten 2D-Scans gelegt, wobei das Gitternetz die geschichteten 2D-Scans in vertikaler Richtung verbindet. Es entsteht also ein sogenanntes 3D-Mesh.

in einem weiteren Schritt wird das Gitternetz in ein Voxelformat konvertiert zur Schaffung eines virtuellen Festkörpers mit den Rändern der ausgewählten Struktur als das virtuelle 3D-Modell. Es findet also ein Übergang von einem Vektor- in ein Voxelformat, also von einer Hülle zu einem massiven Körper, statt. In diesem Format können virtuelle Bearbeitungen und Bewegungen im Raum besser durchgeführt werden, z. B. durch vorhandene Voxel-Editoren, also Zeichenprogramme für Voxel. Ein geeignetes Konvertierungsverfahren ist der "Marching Cube Algorithm".

Bei den oben geschilderten Konvertierungen ist stets darauf zu achten, dass die Dimensionen, also Maße, seit dem Scan stets mitgeführt werden. Die Auflösung des 3D-Scanners ist bekannt, auch wenn dieser mit Polarkoordinaten arbeitet. Ferner ist der Abstand von Schicht zu Schicht bekannt, selbst wenn diese nicht parallel zueinander liegen (z. B. bei Polarkoordinaten).

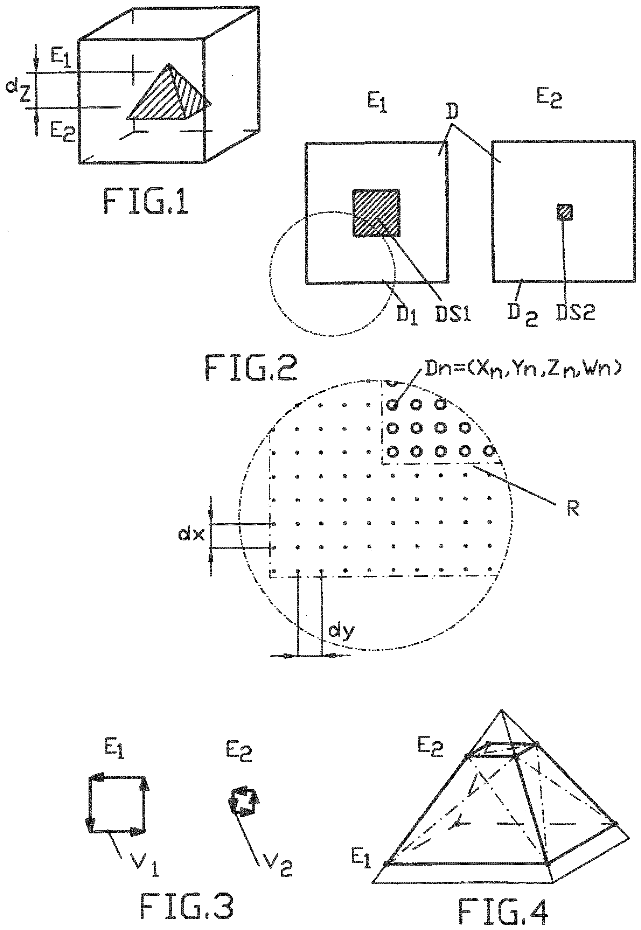

Bevor konkrete Nutzungen des erfindungsgemäß hergestellten der virtuellen 3D-Modells beschrieben werden, erfolgt eine detailliertere Formulierung des oben beschriebenen Verfahrens. Dabei werden die folgenden Schritte durchgeführt, wobei lediglich zum besseren Verständnis der Zeichen auf die Figuren 1-4 Bezug genommen wird,
a. Schichtweise Durchführung eines 3D-Scans mittels des Scanners mittels mehrerer 2D-Scans über mehrere Schichten E1, E2 des realen Objekts mit einer definierten Horizontalauflösung dX, dY in den Ebenen der Schichten und einer definierten Vertikalauflösung dZ senkrecht zur Ebene der Schichten, welche dem Abstand zwischen zwei benachbarten Schichten entspricht.
   Der in Figur 1 dargestellte Würfel aus einem ersten Material beinhaltet eine Struktur S als reales 3D-Objekt aus einem zweiten Material in Form einer Pyramide. Der Würfel wird nun mittels eines bildgebenden Verfahrens, z. B. Ultraschall, schichtweise abgescant. Die vertikale Auflösung ist hier der Abstand zwischen zwei Schichten.
b. Erzeugung und Speichern eines Datensatzes D mit XYZ-Koordinaten und dazugehörigen beim Scan gescanten diskreten Werten W je XYZ-Koordinate auf dem Computer.
   Der diskrete Wert W entspricht dabei einer Eigenschaft des realen Objekts an der jeweiligen Koordinate. Diese muss nicht zwingend als katesische Koordinate im Format X,Y,Z vorliegen und es ist ausreichend, dass lediglich die Position im Raum eindeutig definiert ist, Vorzugsweise werden lediglich die vom Scanner kommenden Rohdaten weiterverarbeitet, d. h. es findet vorzugsweise keine Kompression statt.
c. Auswählen einer Schicht E1 aus den gescanten SchichtenE1, E2 durch den Nutzer am Computers.
   Der Nutzer sucht nun eine geeignete Schicht, also einen 2D-Schnitt aus, der eine für das Verfahren relevante Struktur gut darstellt. Diese 2D-Schnitte sind in Figur 2 dargestellt und zeigen den Würfel als äußeren Rand und den darin liegenden Schnitt durch die Pyramide in unterschiedlichen Ebenen.
d. Bildhaftes Darstellen eines Teildatensatzes D1 aus dem Datensatzes D, welcher der vom Nutzer ausgewählten Schicht E1 zugeordnet ist durch den Computer.
   Dem Nutzer wird nun die ausgewählte Ebene angezeigt, wie z. B. in Figur 2, links dargestellt.
e. Auswählen einer bestimmten Struktur S, welche Bestandteil des zu erzeugenden virtuellen 3D-Modells sein soll in der auf dem Computer dargestellten ausgewählten Schicht durch den Nutzer.
   Der Nutzer wählt nun die ihn Interessierende Struktur S, nämlich den Schnitt durch die Pyramide in der ausgewählten Schicht aus.
f. Speichern derjenigen zur Struktur S in der ausgewählten Schicht E1 gehörenden Strukturdaten DS1 aus dem Datensatz D durch den Computer.
   Durch geeignete manuelle oder automatische Verfahren, welche oben bereits erläutert wurden, werden die in der konkreten Ansicht zur Struktur gehörenden Daten markiert und gespeichert. Der Begriff "Speichern" ist hier funktionell zu verstehen, d. h. das Computerprogramm muss zumindest für interne Zwecke eine Zwischenspeicherung durchführen.
g. Durchsuchen der restlichen Datensätze D2 nach vergleichbaren zur Struktur S in den nicht-ausgewählten Schichten E2 gehörenden Daten durch den Computer und Speichern der gefundenen Daten als Strukturdaten DS2 durch den Computer.
   Wie bereits oben ausgeführt, kann nun manuell oder automatisch eine Markierung und Speicherung der zur Struktur gehörenden Daten in den anderen Schichten erfolgen. Dabei kann das Computerprogramm auf Eigenschaften der in Schritt f) markierten Bildpunkte zurückgreifen,
h. Vorzugsweise erfolgt eine Wiederholung der Schritte c) - g) oder d) - g) oder e) - g) mit weiteren ausgewählten Strukturen Sa, Sb und dabei Erzeugung weiterer Strukturdaten DSa1, DSa2, DSb1, DSb2.
   Darunter ist zu verstehen, dass möglicherweise eine Vielzahl von Strukturen vorhanden sind, also z. B. im Inneren der in Figur 1 dargestellte Pyramide eine weitere Struktur, z. B. eine Kugel, versteckt ist. Sofern diese weitere Struktur für das Verfahren von Interesse ist, wird auch diese auf zweckmäßige Art markiert, erkannt und gespeichert.
i. Schichtweise Konvertierung der Ränder der Strukturdaten DS1, DS2 in Vektordaten V1, V2 in jeder Schicht E1, E2, wobei die Vektordaten V1, V2 auch den diskreten Wert W der ausgewählten Struktur beinhalten können.
   Dieser Schritt umfasst eine Erkennung der Ränder der einzelnen Strukturen in der jeweiligen Ebene, also z. B. den Rand des Quadrates der Pyramide in Figur 2, links. Dabei werden die Ränder R vektorisiert, wie bereits oben erläutert. Die Vektoren V1, V2 in den Ebenen E1, E2 zeigt Figur 3.
j. Falls Schritt h) durchgeführt wurde: Wiederholung von Schritt i) mit den weiteren Strukturdaten DSa1, DSa2, DSb1, DSb2 und dabei Erzeugung weiterer Vektordaten VSa1, VSa2, VSb1, VSb2.
   Dieser Schritt bezieht sich auf den Sonderfall, dass eine Vielzahl von Strukturen für die Durchführung des Verfahrens von Relevanz sind.
k. Errechnen von Netzdaten N, weiche ein virtuelles Gitternetz repräsentieren, welches durch die mit dem Abstand der vertikalen Auflösung dZ gestapelten Vektordaten V1, V2 verläuft, so dass das Gitternetz die Hülle der ausgewählten Struktur bildet; wobei die Netzdaten N auch den diskreten Wert W der ausgewählten Struktur beinhalten können.
   Die einzelnen Schichten werden nunmehr so wie ursprünglich im Raum übereinander angeordnet und mit einem 3D-Mesh versehen, welches durch die Vektoren bzw. Knotenpunkte derselben verläuft. Das Netz wird nicht als eine Hülle über die Vektoren, sondern in die Vektoren gelegt. Durch Berücksichtigung der vertikalen Auflösung, erhält man ein Netz, welches auch die Höhe des realen abgescanten Objekts repräsentiert; siehe Figur 4.
l. Falls Schritt h) durchgeführt wurde: Wiederholung von Schritt k) mit den weiteren Vektordaten VSa1, VSa2, VSb1, VSb2 und dabei Erzeugung weiterer Netzdaten Na, Nb
   Dieser Schritt bezieht sich auf den Sonderfall, dass eine Vielzahl von Strukturen für die Durchführung des Verfahrens von Relevanz sind.
m. Konvertierung der Netzdaten N in Voxeldaten V zur Schaffung eines virtuellen Festkörpers mit den Grenzen der ausgewählten Struktur S, wobei die Voxeldaten V auch den diskreten Wert W der ausgewählten Struktur beinhalten können.
   Auf Basis von Voxeldaten kann der virtuelle Körper besser dargestellt und bearbeitet werden.
n. Falls Schritt h) durchgeführt wurde: Wiederholung von Schritt m) mit den weiteren Netzdaten Na, Nb und dabei Erzeugung weiterer Voxeldaten Va, Vb zur Schaffung weiterer virtueller Festkörper mit den Rändern der weiteren Strukturen Sa, Sb,
   Dieser Schritt bezieht sich auf den Sonderfall, dass eine Vielzahl von Strukturen für die Durchführung des Verfahrens von Relevanz sind.
o. Speichern der Voxeldaten V, V1, V2 als das virtuelle 3D-Modell.
   Zur weiteren Bearbeitung ist es zweckmäßig, die mit dem erfindungsgemäßen Verfahren erzeugten Voxeldaten zwischenzuspeichern.

Vorzugsweise haben die durch die Voxeldaten V, Va, Vb repräsentierten Voxel oder Quader eine Kantenlänge, die gleich oder kleiner, vorzugsweise weniger als 50% der vertikalen Auflösung sind. Dies ergibt ein virtuelles 3-D-Modell mit geringer Stufenbildung in vertikaler Errichtung Erfindungsgemäß erfolgt der 3D-Scan zu medizinischen, therapeutischen oder kosmetischen Zwecken mittels eines auf diesem Gebiet üblichen bildgebenden Verfahrens, insbesondere CT oder MRT oder 3D-Oberflächenscans. Bisher hat die Fachwelt, und das ist insbesondere der mit bildgebenden Verfahren auf dem medizinischen Bereich betraute Softwareingenieur nicht in Betracht gezogen, eine Kombination von Programmen und Formaten, welche im künstlerischen und kreativen Bereich Einsatz finden, zu nutzen, um mit ihnen Daten aus den oben genannten bildgebenden Verfahren zu verarbeiten,

Vorzugsweise werden in einem oder mehreren der 2D-Scans vom Nutzer einzelne Daten bearbeitet, um beim 3D-Scan aufgetretene Fehlmessungen zu korrigieren und/oder fehlende Daten zu ergänzen, insbesondere zwischen den Schritten d) und e). Es ergibt sich also die Möglichkeit, in einzelnen oder allen Schichten auftretende Fehler oder Ungenauigkeiten zu korrigieren. Darunter wird auch verstanden, dass systematisch für alle Schichten, insbesondere im Schritt e) und gegebenenfalls g) automatisierte Mustererkennungen, Kontrastveränderungen, Helligkeitsveränderungen zum Einsatz kommen. Dabei können insbesondere solche Algorithmen genutzt werden, die nach Art der "Magic Wand" die Struktur markieren können.

Korrekturen von Fehlern oder fehlenden Elementen sind grundsätzlich während allen Schritten, in denen Schichtbilder oder bereits das virtuelle Modell angezeigt werden, möglich.

Nach der Erstellung eines Voxelmodels, also des virtuellen 3D-Modells, kann dieses auf vielfältige Weise eingesetzt werden, um zu einem virtuellen Modell zu gelangen, Dabei kommt es auf die Art der Anwendung an, wobei grundsätzlich drei Fälle unterschieden werden können,
A) Das geschaffene virtuelle 3D-Modell kann unmittelbar als virtuelles Objekt dienen und bedarf keiner weiteren Bearbeitung, Z. B. kann der Schädelknochen einer Mumie die relevante Struktur sein und mit dem erfindungsgemäßen Verfahren zum virtuellen 3D-Model werden. Dieser kann nun real, mit realen Maßen, im Rapid-Prototyping-Verfahren oder CNC ausgedruckt werden,
B) Das geschaffene virtuelle 3D-Modell kann z. B. mittels eines Sculpting-Programms durch den Nutzer in seiner virtuellen Gestalt verändert werden unter Nutzung der Voxeldaten. Die veränderte Gestalt dient als virtuelles Objekt. Damit können z. B. fehlende oder deformierte Stellen, die bereits am realen Objekt vorhanden waren, ausgebessert werden. Dabei kann es sich beispielsweise um eine künstlerische Bearbeitung handeln.
C) An das geschaffene virtuelle 3D-Modell, welches auch durch den Nutzer in seiner virtuellen Gestalt verändert worden sein kann, wird ein neues Objekt angeformt unter Nutzung der Voxeldaten. Es wird also an das virtuelle 3D-Modell etwas angeformt. Z. B. können im virtuellen 3D-Modell eines defekten Schädels die fehlenden Teile ergänzt und modelliert werden. Das angeformte neue Objekt dient dann als virtuelles Objekt, z. B. als Epithese. Die Anformung kann dabei frei gestaltet werden, d. h. nach ästhetischem Empfinden des Nutzers. Sie kann aber auch dadurch entstehen, dass Referenzobjekte als weitere virtuelle 3D-Modelle zur Verfügung stehen und diese die Basis für das angeformte neue Objekt bilden. So können z. B. individuelle Brustprothesen für Mammakarzinompatientinnen geschaffen werden, wobei das virtuelle 3D-Modell die amputierte Situation darstellt und ein weiteres virtuelles 3D-Modell der Brust vor der Amputation als Referenzobjekt dient zur Erzeugung des angefochtenen neuen Objekts. Als Referenzobjekt kann in diesem Fall auch die Spiegelung eines weiteren 3D-Modells der noch vorhandenen Brust dienen.

Vorzugsweise wird das in dem Fällen A) - C) generierte Objekt in einem Voxelformat abgespeichert und ohne weitere Konvertierung weiterverarbeitet, um Genauigkeitsverluste zu vermeiden. Alternativ erfolgt jedoch eine Konvertierung und Speicherung in ein Gitternetzformat. Dies hat den Vorteil, dass es derzeit eine Vielzahl von Weiterverarbeitungsmöglichkeiten gibt, die alle auf bekannten Gitternetzformaten basieren. Vorteilhafterweise erfolgt eine Konvertierung in ein für das jeweilige Ausgabegerät, z. B. Drucker, Formmaschine, etc geeignetes Format.

Das erfindungsgemäß erzeugte virtuelle Objekt kann auf vielerlei Art genutzt werden, sei es im virtuellen Raum oder als 2D-Ausdruck einer bestimmten Ansicht oder 3D-Ausdruck:
Vorzugsweise wird das geschaffene virtuelle Objekt in einer Ansicht ausgedruckt. Eine Ansicht wird somit zu Papier gebracht und dient zu Illustrationszwecken

Das virtuelle Objekt kann mittels eines Computerprogramms im virtuellen Raum bewegt/gedreht und in den entsprechenden Positionen angezeigt werden. Es dient als interaktives Demonstrationsobjekt und kann von allen Seiten betrachtet werden. Vorzugsweise wird es aber mittels einer Formmaschine, z. B. im Rapid-Prototyping oder CNC, als reales Objekt hergestellt. Eine derartige Maschine ermöglicht einen dreidimensionalen "Ausdruck" des virtuellen Objektes und somit Schaffung eines realen dreidimensionalen Objektes. Das reale dreidimensionale Objekt kann unmittelbar ein Produkt sein oder als Positiv- oder Negativform für übliche Abformverfahren dienen.

Wenn vorzugsweise in allen Schritten des Verfahrens die Dimensionen des gescanten realen Objektes mitgeführt werden, enthält das geschaffene virtuelle Objekt die Größen und Proportionen des realen Objektes. Es können also reale Objekte erzeugt werden, die dem eingescanten Original entsprechen bzw. zu diesem passen,

Erfindungsgemäß wird ferner ein wissenschaftliches, medizinisches, therapeutisches oder kosmetisches Produkt beansprucht, welches herstellbar ist unter Nutzung eines 3D-Scans mittels eines auf diesem Gebiet üblichen bildgebenden Verfahrens, insbesondere CT oder MRT oder 3D-Oberflächenscans, Konvertierung des Scans in ein Voxelformat, Bearbeitung desselben und Erschaffen des Produktes durch eine Formmaschine unter Verwendung der bearbeiteten Voxeldaten und/oder mit dem erfindungsgemäßen oben beschriebenen Verfahren.

Dabei handelt es sich insbesondere um die folgenden Produkte: Spastikschiene, Brustprothese, kosmetischer Überzug für Arm- oder Beinprothesen, individuelle Prothesenabdeckung, Epithese, insbesondere im Kopfbereich, Implantat, anatomisches Faksimile für Behandlungs- und Forschungszwecke oder Sitzschale / Schiene, insbesondere für die Pädiatrie. Deren Herstellung und Vorteile werden im folgenden tabellarisch geschildert:
Angepasste Spastikschienen für Schlaganfall- und Unfallpatienten:
- 3D-Scan der entsprechenden Körperpartie, üblicherweise Arm oder Bein, als das reale Objekt und dabei Bildung des virtuellen 3D-Modells;
- Anformung eines neuen virtuellen Objekts (=angepasste Schiene) an das virtuellen 3D-Modell;
- Ausdruck des neuen virtuellen Objekts bzw. Schienenmodells per Rapid-Prototyping;
- Erstellung der individuell angepassten Spastikschiene anhand des ausgedruckten Modells, insbesondere mittels Positiv- und/oder Negativabformung vom Ausdruck.
Durch die perfekt angepasste Form werden Druckstellen (Folgeinfektionen, etc.) vermieden und bessere Behandlungserfolge erzielt.

Individuelle Brustprothesen für Mammakarzinompatientinnen:
- 3D-Scan der amputierten Brust als das reale Objekt und dabei Bildung des virtuellen 3D-Modells;
- 3D-Scan der noch vorhandenen Brust (oder der verbleibenden Brust - dann Spiegelung) als das reale Objekt und dabei Bildung eines virtuellen 3D-Referenzmodells;
- Anformung eines neuen virtuellen Objekts (=Brustmodell) an das virtuellen 3D-Modell unter Verwendung der Form des virtuellen 3D-Referenzmodells;
- Ausdruck des neuen virtuellen Objekts (=Brustmodell) per Rapid-Prototyping;
- Erstellung einer Negativ-Form durch einen Maskenbildner;
- Guss der Brustprothese anhand der Negativform;
- Kosmetische Anpassung der Brustprothese (Hautton, etc.);
- Anpassung des Befestigungsmechanismus (je nach Wunsch - Implantatslösung, Klebelösung, etc.).
Durch die perfekt angepasste und lebensechte Brust entsteht ein besseres Tragegefühl und eine "mentale" Rehabilitation der Patientin.

Lebensechte, kosmetische Überzüge für Arm- und Beinprothesen:
- 3D-Scan der Prothese, gegebenenfalls der angelegten Prothese, als das reale Objekt und dabei Bildung des virtuellen 3D-Modells; 3D-Scan des noch vorhandenen Körperteils und Spiegelung desselben und dabei Bildung eines virtuellen 3D-Referenzmodells;
- Anformung eines neuen virtuellen Objekts (=Haut-/Muskelmodell) an das virtuellen 3D-Modell unter Verwendung der Form des virtuellen 3D-Referenzmodells;
- Ausdruck des neuen virtuellen Objekts (=Haut-/Muskelmodell) per Rapid-Prototyping;
- Erstellung des Überzugs durch einen Maskenbildner anhand des ausgedruckten Gliedmaßenmodells, insbesondere mittels Positiv- und/oder Negativabformung vom Ausdruck;
- Kosmetische Anpassung des Prothesenüberzugs.
Üblicherweise werden lebensechte, kosmetische Überzüge komplett per Hand hergestellt und sind daher seht teuer. Erfindungsgemäß ist gleiche Qualität schneller und deutlich günstiger herstellbar und leicht replizierbar.

Individuell entworfene Prothesenabdeckungen:
- 3D-Scan der entsprechenden Prothese als das reale Objekt und dabei Bildung des virtuellen 3D-Modells;
- Anformung eines neuen virtuellen Objekts (=Abdeckungsmodell) an das virtuelle 3D-Modell;
- Ausdruck der Abdeckung per Rapid-Prototyping;
- Erstellung der Abdeckung, insbesondere mittels Positiv- und/oder Negativabformung vom Ausdruck.
- Auf Wunsch des Patienten - Oberflächenveredelung der Abdeckung, etc.

Erfindungsgemäß können individuelle Designwünsche bei Patienten so günstig und schnell realisiert werden.

Naturgetreue Epithesen für Patienten mit Defekten im Mund-, Kiefer-, Gesichtsbereich:
- Erstellung eines CTs, MRTs oder 3D-Oberflächenscans (3D-Scans nur bei Tracheostomaversorgungen) als das reale Objekt und dabei Bildung des virtuellen 3D-Modells;
- Anformung eines neuen virtuellen Objekts (=Epithesenmodell) an das virtuelle 3D-Modell;
- Ausdruck des Epithesenmodells per Rapid-Prototyping
- Erstellung der Epithese anhand des ausgedruckten Epithesenmodells durch einen Epithetiker, insbesondere mittels Positiv- und/oder Negativabformung vom Ausdruck.
Der erfindungsgemäße Produktionsprozess ist günstiger, schneller, präziser und lebensechter. Ferner können derart die Epithesen leicht repliziert werden,

Passgenaue Implantate für die Mund-, Kiefer-, Gesichtschirurgie und die Neurochirurgie:
- Erstellung eines CTs, MRTs als das reale Objekt und dabei Bildung des virtuellen 3D-Modells;
- Anformung eines neuen virtuellen Objekts (=Implantatmodell) an das virtuelle 3D-Modell;
- Ausdruck des Implantatmodells per Rapid-Prototyping;
- Erstellung des Implantats anhand des ausgedruckten Implantatmodell durch einen medizinischen Feingießer, insbesondere mittels Positiv- und/oder Negativabformung vom Ausdruck.
Der erfindungsgemäße Produktionsprozess erspart einige chirurgische Eingriffe und ist somit, günstiger, schneller, präziser und weniger belastend für den Patienten.

Exakte, anatomische Faksimiles für Behandlungs- und Forschungszwecke:
- Erstellung eines CTs, MRTs eine Körperpartie als das reale Objekt und dabei Bildung des virtuellen 3D-Modells;
- Virtuelle Bearbeitung des virtuellen 3D-Modells und Schaffung des virtuellen Objekts (Körperpartiemodell);
- Ausdruck des Körperpartiemodells (Anatomischen Faksimile) per Rapid-Prototyping.
- Gegebenenfalls: Handwerkliche Erstellung des Faksimiles anhand des ausgedruckten Modells, insbesondere mittels Positiv- und/oder Negativabformung vom Ausdruck.
Anhand der erfindungsgemäß besonders einfach und genau zu fertigbaren Faksimiles ist eine präoperative Planung deutlich erleichtert - zudem können sie bei der Aufklärung von Tathergängen in der Forensik sehr nützlich sein.

Neuartige Sitzschalen und Schienen für die Pädiatrie:
- 3D-Scan der entsprechenden Körperpartie als das reale Objekt und dabei Bildung des virtuellen 3D-Modells;
- Anformung eines neuen virtuellen Objekts (=Sitzschalenmodell) an das virtuelle 3D-Modell;
- Ausdruck des Schalenmodells per Rapid-Prototyping;
- Handwerkliche Erstellung der individuell angepassten Schale anhand des ausgedruckten Modells, insbesondere mittels Positiv- und/oder Negativabformung vom Ausdruck.
Durch die perfekt angepasste Form werden Druckstellen (Folgeinfektionen, etc.) vermieden und bessere Behandlungserfolge erzielt,

Die angegebenen Produkte machen deutlich, dass das erfindungsgemäße Verfahren ein kreatives, genaues Arbeiten an einem virtuellen Objekt möglich macht. So ist die Anwesenheit des traumatisierten Patienten oder ein Eingriff in den Patienten nicht nötig, sondern der Fachmann kann am virtuellen oder ausgedruckten 3D-Modell arbeiten.

Besondere, vom Fachmann zu berücksichtigende Details aus praktischer Erfahrung mit dem Verfahren sind wie folgt stichwortartig wiedergegeben:
- Ein CT, MRT oder 3D-Oberflächenscan wird erstellt.
- Dateneinlesung, Konvertierung, Segmentierung, Modellierung / Rekonstruktion (optional) und Export der Daten in eines der folgenden Formate (je nach Anwendung): OBJ, FBX, PLY, WRL, STL, DXF. Dabei ist entscheidend, dass die CT- und MRT-Daten vorab nicht komprimiert werden ("raw data").
- Der exportierte Datensatz dient als virtuelles 3D-Modell oder als Referenzvorlage (z.B. bei der Erstellung von Spastikschienen, etc.) für die Erstellung von virtuellen 3D-Modellen. Virtuelle 3D-Modelle können verändert (modelliert/ erweitert/rekonstruiert) werden und per Rapid-Prototyping oder CNC als physikalische Modelle umgesetzt werden. Dabei arbeitet man meist mit 3D-Mesh-Varianten, bestehend aus Triangles, Quads oder daraus konvertierten Voxelmodellen, die auch, bei Bedarf (z. B. für Real-Time-Prozesse, physikalische Simulationen) in neuen Topologien umgesetzt werden können. Die 3D-Mesh-Varianten können / müssen, je nach Notwendigkeit, wieder umkonvertiert werden.
- Das virtuelle 3D-Modell wird entweder in das STL-Format exportiert (für Visualisierungen und Ausdrucke ohne Farbe) oder in eines der beiden folgenden Formate: "Virtual Reality Modeling Language" -Format oder das von der Stanford University entwickelte "Polygon File"-Format (für Visualisierungen und Ausdrucke in Farbe).
- Das virtuelle 3D-Modell wird für den Ausdruck aufbereitet - diverse Fixing-Prozesse bezüglich potentieller Störfaktoren müssen dafür stattfinden (z.B. das Beseitigen von bad edges, intersecting triangles, overlapping triangles, flip normals, noise shells, etc.). Dabei kann das virtuelle 3D-Modell so angepasst werden, dass das physikalische Modell anschließend hohl ausgedruckt werden kann - bei skalierbarer Wandstärke und ohne den Verlust wichtiger Informationen, wie z.B. von UV-Koordinaten. Anschließend ist das Modell sozusagen "wasserdicht" (watertight).
- Weitere Optimierungen finden, je nach Anforderung der Ausgabetechnologie, in einer scriptgesteuerten Software statt (Python),
- Bau des physikalischen Modells für den jeweiligen Produktbereich in Shore Härte ab 27.

## Patentansprüche

1. Computerimplementiertes Verfahren zum Erzeugen eines virtuellen 3D-Modells eines dreidimensionalen realen Objekts mittels eines Scanners und eines damit verbunden Computers, mit folgenden Schritten:
a. Schichtweise Durchführung eines 3D-Scans mittels des Scanners mittels mehrerer 2D-Scans über mehrere Schichten (E1, E2) des realen Objekts mit einer definierten Horizontalauflösung (dX, dY) in den Ebenen der Schichten und einer definierten Vertikalauflösung (dZ) senkrecht zur Ebene der Schichten, welche dem Abstand zwischen zwei benachbarten Schichten entspricht und dabei
b. Erzeugung und Speichern eines Datensatzes (D) mit XYZ-Koordinaten (oder Vglb) und dazugehörigen beim Scan gescanten diskreten Werten (W) je XYZ-Koordinate auf dem Computer, wobei die diskreten Werte (W) einer Eigenschaft des realen Objektes an der jeweiligen Koordinate entsprechen;
c. Auswählen einer Schicht (E1) aus den gescanten Schichten(E1, E2) durch den Nutzer am Computers;
d. Bildhaftes Darstellen eines Teildatensatzes (D1) aus dem Datensatzes (D), welcher der vom Nutzer ausgewählte Schicht (E1) zugeordnet ist durch den Computer;
e. Auswählen einer bestimmten Struktur (S), welche Bestandteil des zu erzeugenden virtuellen 3D-Modells sein soll in der auf dem Computer dargestellten ausgewählten Schicht durch den Nutzer;
f. Speichern derjenigen zur Struktur (S) in der ausgewählten Schicht (E1) gehörenden Strukturdaten (DS1) aus dem Datensatz (D) durch den Computer;
g. Durchsuchen des restlichen Datensätze (D2) nach vergleichbaren zur Struktur (S) in den nicht-ausgewählten Schichten (E2) gehörenden Daten durch den Computer und Speichern der gefundenen Daten als Strukturdaten (DS2) durch den Computer;
h. Vorzugsweise: Wiederholung der Schritte c) - g) oder d) - g) oder e) - g) mit weiteren ausgewählten Strukturen (Sa, Sb) und dabei Erzeugung weiterer; Strukturdaten (DSa1, DSa2, DSb1, DSb2).
i. Schichtweise Konvertierung der Ränder der Strukturdaten (DS1, DS2) in Vektordaten (V1, V2) in jeder Schicht (E1, E2), wobei die Vektordaten (V1, V2) auch den diskreten Wert (W) der ausgewählten Struktur beinhalten;
j. Falls Schritt h) durchgeführt wurde: Wiederholung von Schritt i) mit den weiteren Strukturdaten (DSa1, DSa2, DSb1, DSb2) und dabei Erzeugung weiterer Vektordaten (VSa1, VSa2, VSb1, VSb2)
k. Errechnen von Netzdaten (N), welche ein virtuelles Gitternetz repräsentieren, welches durch die mit dem Abstand der vertikalen Auflösung (dZ) gestapelten Vektordaten (V1, V2) verläuft, so dass das Gitternetz die Hülle der ausgewählten Struktur bildet; wobei die Netzdaten (N) auch den diskreten Wert (W) der ausgewählten Struktur beinhalten;
l. Falls Schritt h) durchgeführt wurde: Wiederholung von Schritt k) mit den weiteren Vektordaten (VSa1, VSa2, VSb1, VSb2) und dabei Erzeugung weiterer Netzdaten (Na, Nb)
m. Konvertierung der Netzdaten (N) in Voxeldaten (V) zur Schaffung eines virtuellen Festkörpers mit den Grenzen der ausgewählten Stuktur (S), wobei die Voxeldaten (V) auch den diskreten Wert (W) der ausgewählten Struktur beinhalten;
n. Falls Schritt h) durchgeführt wurde: Wiederholung von Schritt m] mit den weiteren Netzdaten (Na, Nb) und dabei Erzeugung weiterer Voxeldaten (Va, Vb) zur Schaffung weiterer virtueller Festkörper mit den Rändern der weiteren Stukturen (Sa, Sb),
o. Speichern der Voxeldaten (V, V1, V2) als das virtuelle 3D-Modell.

2. Verfahren nach einem der vorherigen Ansprüche, wobei die durch die Voxeldaten (V, Va, Vb) repräsentierten Voxel oder Quader eine Kantenlänge aufweisen, die gleich oder kleiner, vorzugsweise weniger als 50% der vertikalen Auflösung sind.

3. Verfahren nach einem der vorherigen Ansprüche, wobei der 3D-Scan zu wissenschaftlichen, medizinischen, therapeutischen oder kosmetischen Zwecken mittels eines auf diesem Gebiet üblichen bildgebenden Verfahrens, insbesondere CT oder MRT oder 3D-Oberflächenscans durchgeführt wird.

4. Verfahren nach einem der vorherigen Ansprüche, wobei in einem oder mehreren der 2D-Scans vom Nutzer einzelne Daten bearbeitet werden, um beim 3D-Scan aufgetretene Fehlmessungen zu korrigieren und/oder fehlende Daten zu ergänzen, insbesondere zwischen den Schritten d) und e).

5. Verfahren nach einem der vorherigen Ansprüche, wobei im Schritt e) und gegebenenfalls g) automatisierte Mustererkennungen, Kontrastveränderungen, Helligkeitsveränderungen, insbesondere nach Art der "Magic Wall" zum Einsatz kommen, um die Struktur zu markieren.

6. Verfahren nach einem der vorherigen Ansprüche, wobei das geschaffene virtuelle 3D-Modell als virtuelles Objekt dient.

7. Verfahren nach einem der vorherigen Ansprüche, wobei das geschaffene virtuelle 3D-Modell mittels eines Sculpting Programms durch den Nutzer in seiner virtuellen Gestalt verändert wird unter Nutzung der Voxeldaten und die veränderte Gestalt als virtuelles Objekt dient.

8. Verfahren nach einem der vorherigen Ansprüche, wobei an das geschaffene virtuelle 3D-Modell, welches vorzugsweise mittels eines Sculpling Programms durch den Nutzer in seiner virtuellen Gestalt verändert wurde, ein neues Objekt angeformt wird unter Nutzung der Voxeldaten und das angeformte neue Objekt als virtuelles Objekt dient.

9. Verfahren nach einem der Ansprüche 6 - 8, wobei das virtuelle Objekt in einem Voxelformat abgespeichert werden
oder
in ein Gitternetzformat konvertiert und in dem Gitternetzformat abgespeichert wird.

10. Verfahren nach einem der vorherigen Ansprüche, wobei das geschaffene virtuelle Objekt
- in einer Ansicht ausgedruckt wird; und/oder
- mittels eines Computerprogramms im virtuellen Raum bewegt / gedreht und in den entsprechenden Positionen angezeigt werden kann; und/oder
- mittels einer Formmaschine, z. B. im Rapid -Prototyping oder CNC, als reales Objekt hergestellt wird, wobei vorzugsweise mittels dieses realen Objekts Positiv- oder Negativabformungen durchgeführt werden.

11. Verfahren nach einem der vorherigen Ansprüche, wobei in allen Schritten des Verfahrens die Dimensionen des gescanten realen Objekt erfasst bzw. mitgeführt werden, derart, dass das geschaffene virtuelle Objekt die Größen und Proportionen des realen Objekt enthält.

## Claims

1. A computer-implemented method for generating a virtual 3D model of a three-dimensional real object by means of a scanner and a computer connected therewith, comprising the following steps:
a. carrying out, layer by layer, a 3D scan using the scanner, by means of several 2D scans over several layers (E1, E2) of the real object with a defined horizontal resolution (dX, dY) in the planes of the layers and a defined vertical resolution (dZ) perpendicular to the plane of the layers, which corresponds to the distance between two adjacent layers, and, in the process,
b. generating and storing on the computer a data set (D) with XYZ coordinates (or comparable) and associated discrete values (W), which were scanned during the scan, for each XYZ coordinate, wherein the discrete values (W) correspond to a characteristic of the real object at the respective coordinate;
c. selection of a layer (E1) from the scanned layers (E1, E2) by the user at the computer;
d. graphic display by the computer of a partial data set (D1) from the data set (D) associated with the layer (E1) selected by the user;
e. selection by the user of a certain structure (5), which is to be a constituent part of the virtual 3D model to be generated, in the selected layer displayed by the computer;
f. storing, by the computer, those structure data (DS1) from the data set (D) that are associated with the structure (S) in the selected layer (E1);
g. searching, by means of the computer, in the remaining data sets (D2) for comparable data associated with the structure (S) in the non-selected layers (E2), and storing, by means of the computer, the data found as structure data (DS2);
h. preferably: repeating the steps c) - g), or d) - g), or e) - g) with further selected structures (Sa, Sb) and, in the process, generating further structure data (DSa1, DSa2, DSb1, DSb2),
i. converting, layer by layer, the edges of the structure data (DS1, DS2) into vector data (V1, V2) in each layer (E1, E2), wherein the vector data (V1, V2) also contain the discrete value (W) of the selected structure;
j. if step h) has been carried out: repeating step i) with the further structure data (DSa1, DSa2, DSb1, DSb2) and, in the process, generating further vector data (VSa1, VSa2, VSb1, VSb2)
k. computing mesh data (N) representing a virtual mesh that passes through the vector data (V1, V2) stacked at the distance of the vertical resolution (dZ), so that the mesh forms the shell of the selected structure; wherein the mesh data (N) also contain the discrete value (W) of the selected structure;
l. if step h) has been carried out: repeating step k) with the further vector data (VSa1, VSa2, VSb1, VSb2) and, in the process, generating further mesh data (Na, Nb)
m. converting the mesh data (N) into voxel data (V) for creating a virtual solid body with the boundaries of the selected structure (5), wherein the voxel data (V) also contain the discrete value (W) of the selected structure;
n. if step h) has been carried out: repeating step m) with the further mesh data (Na, Nb) and, in the process, generating further voxel data (Va, Vb) for creating further virtual solid bodies with the edges of the further structures (Sa, Sb),
o. storing the voxel data (V, V1, V2) as the virtual 3D model.

2. The method according to any one of the preceding claims, wherein the voxels or cuboids represented by the voxel data (V, Va, Vb) have a side length equal to or less than, preferably less than 50% of, the vertical resolution.

3. The method according to any one of the according to any one, wherein the 3D scan is carried out for scientific, medical, therapeutic or cosmetic purposes by means of an imaging method common in this field, in particular by means of a CT or MRT or 3D surface scan.

4. The method according to any one of the preceding claims, wherein individual data are edited by the user in one or several of the 2D scans in order to correct incorrect measurements occurring during the 3D scan and/or to add missing data, particularly between the steps d) and e).

5. The method according to any one of the preceding claims, wherein automated pattern recognitions, contrast changes, brightness changes, particularly of the "Magic Wall" type, are used in steps e) and, if necessary, g), in order to mark the structure.

6. The method according to any one of the preceding claims, wherein the created 3D model serves as a virtual object.

7. The method according to any one of the preceding claims, wherein the created 3D model is changed by the user with respect to its virtual shape, using the voxel data, by means of a sculpting program, and the changed shape serves as a virtual object.

8. The method according to any one of the preceding claims, wherein, using the voxel data, a new object is attached to the created virtual 3D model, which was changed by the user with respect to its virtual shape, preferably by means of a sculpting program, and the attached new object serves as a virtual object.

9. The method according to any one of the claims 6 - 8, wherein the virtual object is stored in a voxel format
or
is converted into a mesh format and stored in the mesh format.

10. The method according to any one of the preceding claims, wherein the created virtual object
- is printed out in an illustration; and/or
- can be moved/rotated in virtual space by means of a computer program and displayed in the corresponding positions; and/or
- is manufactured as a real object by means of a molding machine, e.g. by rapid prototyping or CNC, wherein positive or negative molding processes are carried out preferably by means of this real object.

11. The method according to any one of the preceding claims, wherein the dimensions of the scanned real object are detected or taken along in all steps of the method, such that the created virtual object contains the sizes and proportions of the real object.

## Revendications

1. Procédé implémenté par ordinateur destiné à générer un modèle virtuel 3D d'un objet réel tridimensionnel en utilisant un scanner et un ordinateur connecté à celui-ci, comprenant les étapes consistant à :
a. exécuter par couche un balayage 3D au moyen du scanner au moyen de plusieurs balayages 2D sur plusieurs couches (E1, E2) de l'objet réel avec une résolution horizontale définie (dX, dY) dans les plans des couches et une résolution verticale définie (dZ) perpendiculaire au plan des couches, qui correspond à la distance entre deux couches adjacentes et en processus
b. générer et stocker sur l'ordinateur un ensemble de données (D) avec des coordonnées XYZ (ou Vglb) et des valeurs discrètes associées (W) XYZ balayées lors du balayage par coordonnée, les valeurs discrètes (W) correspondant à une propriété de l'objet réel à la coordonnée respective ;
c. sélectionner une couche (E1) parmi les couches scannées (E1, E2) par l'utilisateur sur l'ordinateur ;
d. représenter sous forme d'image par l'ordinateur un ensemble partiel de données (DI) de l'ensemble de données (D) auquel la couche (E1) sélectionnée par l'utilisateur est affectée :
e. sélectionner par l'utilisateur une structure particulière (S) pour faire partie du modèle 3D virtuel à générer dans la couche sélectionnée affichée sur l'ordinateur :
f. stocker par l'ordinateur des données structurelles (DS1) appartenant à la structure (S) dans la couche sélectionnée (E1) de l'ensemble de données (D) ;
g. rechercher dans les autres ensembles de données (D2) des données comparables appartenant à la structure (S) dans les couches non-sélectionnées (E2) par l'ordinateur et stocker les données trouvées comme données structurelles (DS2) par l'ordinateur ;
h. de préférence : Répéter les étapes c)-g) ou d)-g) ou e)-g) avec d'autres structures sélectionnées (Sa, Sb) et ainsi générer d'autres données structurelles (Dsa1, DSa2, DSb1, DSb2).
i. convertir par couches les bords des données structurelles (DS1, DS2) en données vectorielles (V1, V2) dans chaque couche (E1, E2), les données vectorielles (V1, V2) incluant également la valeur discrète (W) de la structure sélectionnée ;
j. si l'étape h) a été effectué : répéter l'étape i) avec les autres données de structure (Dsa1, DSa2, DSb1, DSb2) et ainsi générer d'autres données vectorielles (Vsa1, VSa2, VSb1, VSb2)
k. calculer des données de maillage (N) représentant un maillage virtuel passant à travers les données vectorielles (V1, V2) empilées avec l'écartement de la résolution verticale (dZ) de sorte que le maillage forme l'enveloppe de la structure sélectionnée ; les données de maillage (N) comprenant également la valeur discrète (W) de la structure sélectionnée ;
l. si l'étape h) a été effectuée ; répéter l'étape k) avec les autres données vectorielles (Vsa1, VSa2, VSb1, VSb2) et ainsi générer des données réseau (Na, Nb)
m. convertir les données réseau (N) en données voxel (V) pour créer un solide virtuel avec les limites de la structure sélectionnée (S), les données voxel (V) incluant également la valeur discrète (W) de la structure sélectionnée ;
n. si l'étape h) a été effectuée : répéter l'étape m) avec lesdites autres données de maillage (Na, Nb) et générer ainsi d'autres données voxel (Va, Vb) pour créer d'autres solides virtuels ayant les bords des autres structures (Sa, Sb),
o. stocker les données voxel (V, V1, V2) comme ledit modèle 3D virtuel.

2. Procédé selon l'une des revendications précédentes, dans lequel les voxels ou parallélépipèdes représentés par les données voxel (V, Va, Vb) ont une longueur de bord égale ou inférieure, de préférence inférieure à 50% de la résolution verticale.

3. Procédé selon l'une des revendications précédentes, dans lequel le balayage 3D est effectué à des fins scientifiques, médicales, thérapeutiques ou cosmétiques au moyen d'un procédé d'imagerie usuel dans ce domaine, en particulier CT ou MRT ou balayages de surface 3D.

4. Procédé selon l'une des revendications précédentes, dans lequel des données individuelles sont traitées par l'utilisateur dans un ou plusieurs des scans 2D afin de corriger des mesures erronées survenant pendant le scan 3D et/ou de compléter des données manquantes, en particulier entre les étapes d) et e).

5. Procédé selon l'une des revendications précédentes, dans lequel, à l'étape e) et, le cas échéant, g), on utilise pour le marquage de la structure des changements de contraste, des changements de luminosité, en particulier selon le type "Magic Wall", pour la reconnaissance automatique des motifs.

6. Procédé selon l'une des revendications précédentes, dans lequel le modèle 3D virtuel créé servant d'objet virtuel.

7. Procédé selon l'une des revendications précédentes, dans lequel le modèle 3D virtuel créé est modifié dans sa forme virtuelle par l'utilisateur au moyen d'un programme de sculpture utilisant les données voxel et la forme modifiée sert d'objet virtuel.

8. Procédé selon l'une des revendications précédentes, dans lequel un nouvel objet est formé sur le modèle 3D virtuel créé, qui a été de préférence modifié dans sa forme virtuelle par l'utilisateur au moyen d'un programme de sculpture, en utilisant les données voxel, et le nouvel objet formé sert d'objet virtuel.

9. Procédé selon l'une des revendications 6 à 8, dans lequel l'objet virtuel est stocké dans un format voxel
ou
est converti en un format de grille et enregistré dans le format de grille.

10. Procédé selon l'une des revendications précédentes, dans lequel l'objet virtuel créé
- est imprimé dans une vue ; et/ou
- peut être déplacé / tourné dans l'espace virtuel au moyen d'un programme d'ordinateur et affiché dans les positions correspondantes ; et/ou
- est fabriqué comme un objet réel à l'aide d'une machine de moulage, par exemple en utilisant le prototypage rapide ou la commande numérique par ordinateur CNC, les empreintes positives ou négatives étant de préférence réalisées à l'aide de cet objet réel.

11. Procédé selon l'une des revendications précédentes, dans lequel, dans toutes les étapes du procédé, les dimensions de l'objet réel scanné sont enregistrées ou transportées de telle sorte que l'objet virtuel créé contient les dimensions et proportions de l'objet réel.
